# EUROPÄISCHE PATENTSCHRIFT

(11) **EP 4 277 503 B1**
(45) Veröffentlichungstag und Bekanntmachung des Hinweises auf die Patenterteilung: **21.08.2024**
(21) Anmeldenummer: 21844745.6
(22) Anmeldetag: 28.12.2021
(51) Int. Cl.: A23C 11/10, A23L 11/60, A23L 11/65, A47J 31/18, A47J 31/42

(54) **VERFAHREN ZUM HERSTELLEN EINES MILCHERSATZPRODUKTS**
METHOD FOR PRODUCING A MILK REPLACEMENT PRODUCT
METHODE DE PRODUCTION D'UN PRODUIT DE SUBSTITUT DU LAIT

(30) Priorität: 26.02.2021 DE 102021104742
(43) Veröffentlichungstag der Anmeldung: 22.11.2023
(73) Patentinhaber: Mallinowski, Ivan, 41849 Wassenberg (DE)
(72) Erfinder: Mallinowski, Ivan, 41849 Wassenberg (DE)
(74) Vertreter: Bauer, Dirk
(86) Internationale Anmeldenummer: PCT/EP2021/087701
(87) Internationale Veröffentlichungsnummer: WO 2022/179744

(56) Entgegenhaltungen:
- EP-A1- 0 367 600
- EP-A1- 3 513 689
- CN-A- 102 551 538
- US-A- 3 871 273
- US-A1- 2018 295 849

## Beschreibung

Die Erfindung betrifft zunächst ein Verfahren zum Herstellen eines Milchersatzprodukts nach Anspruch 1.

Eine Vorrichtung der vorgenannten Art, die auch die Durchführung eines vorgenannten Verfahrens ermöglicht, bietet beispielsweise die Springlane GmbH, Düsseldorf/DE unter der Bezeichnung "Mandelmilchbereiter Mila" an. Die bekannte Vorrichtung weist eine Mischkammer auf mit einem rotierbaren Messer als Mischelement darin. Zum Herstellen eines Milchersatzprodukts werden die Pflanzenteile in die Mischkammer und das Wasser in einen außen an der Vorrichtung angebrachten Vorratsbehälter gegeben. Nach dem Schließen der Mischkammer und Einschalten der Vorrichtung wird die Mischkammer aufgeheizt, die Pflanzenteile darin werden mittels des Messers zerkleinert und Wasser aus dem Vorratsbehälter zugeführt. Nach Absetzen des Tresters wird das Milchersatzprodukt aus der Mischkammer in eine Glaskaraffe abgelassen, anschließend wird der in der Mischkammer verbliebene Trester mit Wasser aus dem Vorratsbehälter in einen integrierten Auffangbehälter gespült.

Die Herstellung des Milchersatzprodukts mit der bekannten Vorrichtung ist durch das notwendige Absetzen des Tresters sehr zeitintensiv. Darüber hinaus weist das hergestellt Milchersatzprodukt beim Austritt in die Glaskaraffe zunächst eine sehr hohe Temperatur auf und ist erst nach einer weiteren Wartezeit verzehrfertig.

US 2010/0203209 A1 offenbart ein Verfahren der vorgenannten Art zum Kochen von Kaffee, wobei mit dem Mischelement zunächst Kaffeepulver und Wasser zu einem Brei vermengt werden und der Brei während einer Ziehzeit kontinuierlich gerührt und anschließend durch einen Filter gepumpt wird.

Im Hintergrund der Erfindung ist aus EP 3 068 274 B1 eine ähnliche Vorrichtung zur Herstellung eines Getränks unter Verwendung eines pulverförmigen Nahrungsergänzungsmittels bekannt. Das Nahrungsergänzungsmittel wird dort aus einem rotierbaren Magazin portionsweise zusammen mit Wasser in eine abnehmbare Mischkammer gegeben und beide werden mit einem in die Mischkammer integrierten Mischelement vermischt.

Im weiteren Hintergrund der Erfindung schlägt GB 790,969 A ein kontinuierliches Verfahren vor, wobei über einen Trichter zugeführtes Fleisch zerkleinert und in eine Mischkammer gepumpt, in der Mischkammer mit Heißdampf gegart und in einem Zyklon anschließend aus dem Dampfstrom wieder abgeschieden wird. Aus US 3 871 273 A, EP 3 513 689 A1, DE, 697 00 474 T2, AT 63446 E, DE 699 24 362 T2 und DE 21 06 420 C sind Verfahren zum Herstellen von Kaffee und Tee bekannt, in denen Wasser ohne Verwendung von Mischelementen durch Kaffeepulver bzw. eine Teezubereitung gepresst wird.

### Aufgabe

Der Erfindung liegt die Aufgabe zugrunde, die Herstellung des Milchersatzprodukts zu beschleunigen.

### Lösung

Ausgehend von dem bekannten Verfahren wird nach der Erfindung vorgeschlagen, dass die Pflanzenteile zu einem Brei gemaischt werden, während das Wasser unter einem Überdruck von 2 bis 15 *bar* durch den Brei und einen Filter gepresst wird, der den Trester zurückhält. Die Bestandteile der Pflanzenteile - insbesondere Stärke und Eiweiß daraus - sind in dem gemaischten Brei in hoher Konzentration enthalten und werden von dem durch den Brei strömenden Wasser schnell ausgewaschen. Die Herstellung des Milchersatzprodukts wird so signifikant beschleunigt.

Im bekannten Verfahren fasst die Mischkammer immer die vollständige Menge des fertigen Milchersatzprodukts

Da die Pflanzenteile erfindungsgemäß in konzentrierter Form als Brei in der Mischkammer vorliegen, kann diese und damit die Baugröße einer Vorrichtung zum Ausführen des erfindungsgemäßen Verfahrens gegenüber dem Stand der Technik signifikant verkleinert werden.

Das erfindungsgemäße Verfahren ist geeignet zum Herstellen von Milchersatzprodukten auf Basis von eiweiß- und fetthaltigen echten Nüssen wie Haselnuss, Walnuss, Maroni, Macadamia, Hanf und Bucheckern, Kernen wie Mandel und Kokosnuss, Getreide wie Reis, Hafer, Dinkel und Hirse, weiteren Samen wie Soja, Erdnüsse, Cashew, Lupine, Paranuss, Pekannuss und Pistazie sowie Mischungen daraus.

In einem erfindungsgemäßen Verfahren werden die Pflanzenteile gemaischt, während das Wasser durch den entstehenden Brei gepresst wird. In der gegenüber dem Stand der Technik verkleinerten Mischkammer steht das Mischelement in einem deutlich intensiveren Kontakt mit den Pflanzenteilen. Die Herstellung des Breis und des Milchersatzprodukts wird so weiter beschleunigt. Die Pflanzenteile können vor der Beaufschlagung mit dem Wasser in der Mischkammer gemaischt werden, um eine definierte Konsistenz zu erzielen. Weiter kann ein vorgefertigter Brei in die Mischkammer gegeben werden. Vorzugsweise strömt in einem erfindungsgemäßen Verfahren der Brei turbulent über den Filter. So werden Ablagerungen des Tresters auf dem Filter vermieden. Vorzugsweise umfassen in einem solchen erfindungsgemäßen Verfahren die Pflanzenteile trockene Bestandteile wie Schalen, Hüllen, Hülsen, Spelzen oder Grannen. Die trockenen Bestandteile begünstigen die Reinigungswirkung des über den Filter strömenden Breis.

Vorzugsweise werden in einem erfindungsgemäßen Verfahren das Wasser und/oder der Brei erhitzt. Die höhere Temperatur begünstigt das Auswaschen der Bestandteile der Pflanzenteile in das Milchersatzprodukt. Weiterhin kann das Milchersatzprodukt so unmittelbar als Heißgetränk hergestellt werden.

Vorzugsweise wird in einem erfindungsgemäßen Verfahren des Milchersatzprodukts ein Emulgator zugesetzt. Der Emulgator begünstigt die Bildung kleiner Fetttröpfchen im Wasser und wirkt einer Entmischung des Milchersatzprodukts entgegen. Die Fetttröpfchen können in einem erfindungsgemäßen Verfahren Bestandteil der Pflanzenteile sein - beispielsweise bei Nüssen. Als Emulgator kommt beispielsweise Sojalecithin in Betracht.

Weiter vorzugsweise wird in einem erfindungsgemäßen Verfahren des Milchersatzprodukts ein Öl zugesetzt. Durch die Zugabe von Öl kann der Fettgehalt des Milchersatzprodukts gesteigert werden.

In einem erfindungsgemäßen Verfahren können die Pflanzenteile zumindest teilweise gequollen, gekeimt, gemälzt, vergoren, enzymatisch behandelt, geröstet und/oder gebrannt werden. Die individuelle Vorbehandlung von Pflanzenteilen beeinflusst Inhaltsstoffe und Geschmack des Milchersatzprodukts.

Ausgehend von der bekannten Vorrichtung wird nach der Erfindung vorgeschlagen, dass die Mischkammer bis auf den Auslass und einen Einlass für das Wasser derart druckdicht ist, dass das Wasser aus dem Einlass durch die Mischkammer unter einem Überdruck von 2 bis 15 *bar* zu dem Auslass pressbar ist, und dass die Mischkammer vor dem Auslass einen Filter zum Zurückhalten des Tresters aufweist. Die Vorrichtung erlaubt die Ausführung eines der vorgenannten erfindungsgemäßen Verfahren und zeichnet sich gleichermaßen durch die dort genannten Vorteile aus.

Vorzugsweise ist in einer Vorrichtung der Filter ein gelochtes Metallblech. Ein gelochtes Blech kann zum einen - durch Wahl der Anzahl und Geometrie der Löcher - gut an das jeweils gewünschte erfindungsgemäße Verfahren angepasst werden. Beispielsweise beeinflusst der durchströmte Querschnitt des Blechs die Verweildauer des Milchersatzprodukts in der Mischkammer. Zum andern erleichtert die glatte Oberfläche des Blechs dessen Reinigung.

Vorzugsweise erzeugt in einer Vorrichtung das Mischelement eine Strömung des Breis über den Filter. Das Mischelement erfüllt so eine zweifache technische Funktion. Die Strömung des Breis kann alternativ oder ergänzend durch gezieltes Einspritzen des Wassers in die Mischkammer induziert werden.

Vorzugsweise weist eine Vorrichtung eine Druckpumpe für das Wasser auf. Das Wasser kann dann drucklos der Vorrichtung zugeführt werden. Die Druckpumpe kann insbesondere eine Kolbenpumpe sein. Alternativ kann die Druckpumpe eine Peristaltikpumpe sein. Eine solche

Vorrichtung ist besonders wartungsarm. Weiter alternativ kann das Wasser der Vorrichtung aus einem unter Druck stehenden System - beispielsweise unmittelbar aus dem öffentlichen Trinkwassernetz - zugeführt werden. Vorzugsweise weist eine solche erfindungsgemäße Vorrichtung einen Vorratsbehälter für das Wasser auf. Der Vorratsbehälter kann fest in die Vorrichtung integriert oder abnehmbar sein.

### Ausführungsbeispiel

Die Erfindung wird nachfolgend anhand eines Ausführungsbeispiels erläutert. Es zeigen
- Fig. 1: eine erfindungsgemäße Vorrichtung in isometrischer Darstellung,

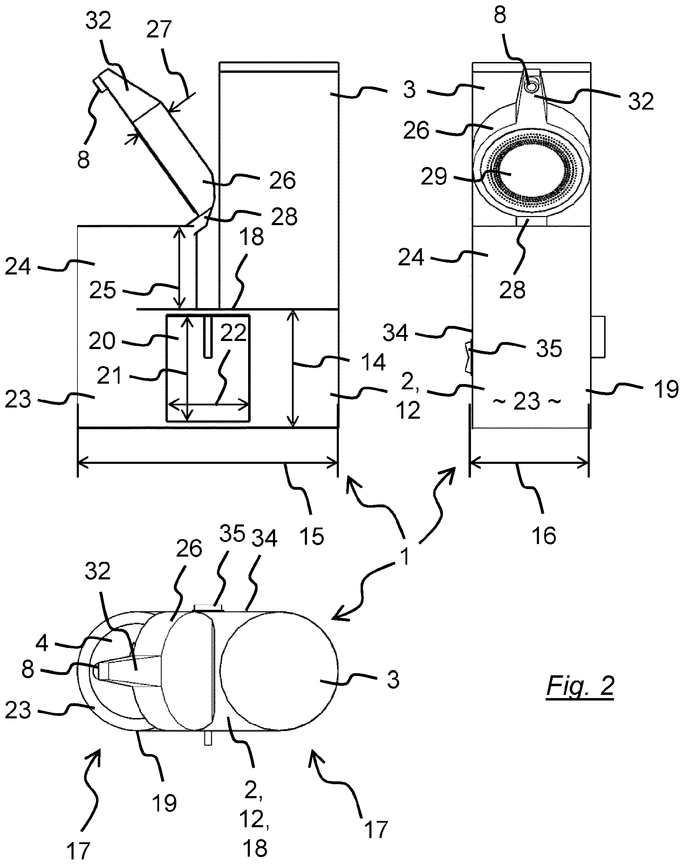

- Fig. 2: drei Ansichten der erfindungsgemäßen Vorrichtung in Normalprojektion,

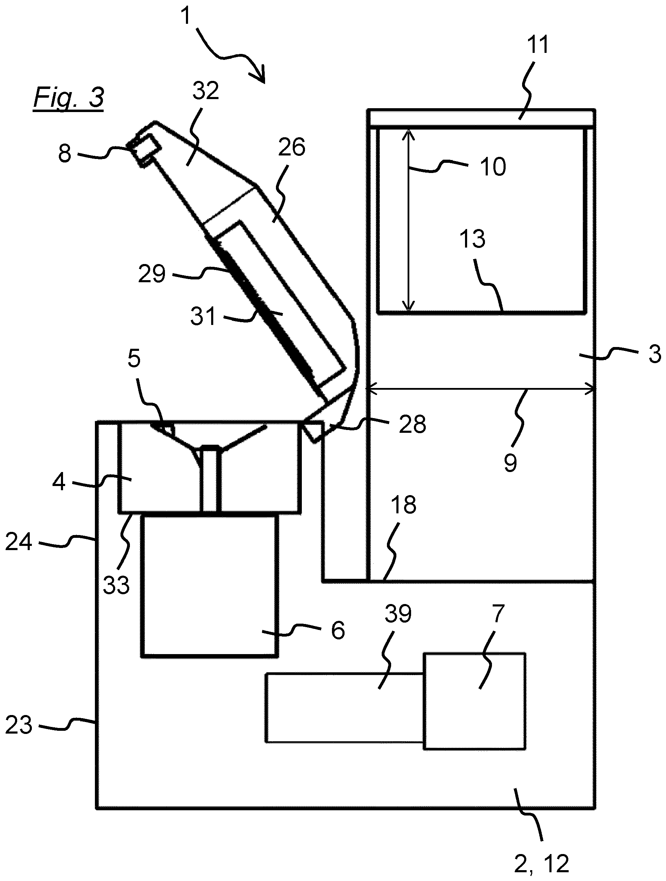

- Fig. 3: ein Schnitt durch die erfindungsgemäße Vorrichtung und

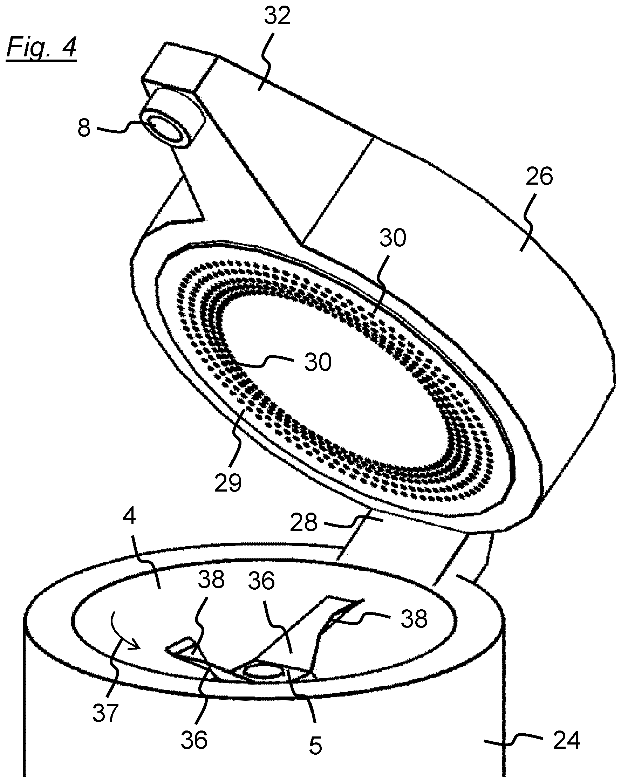

- Fig. 4: ein Detail der erfindungsgemäßen Vorrichtung.

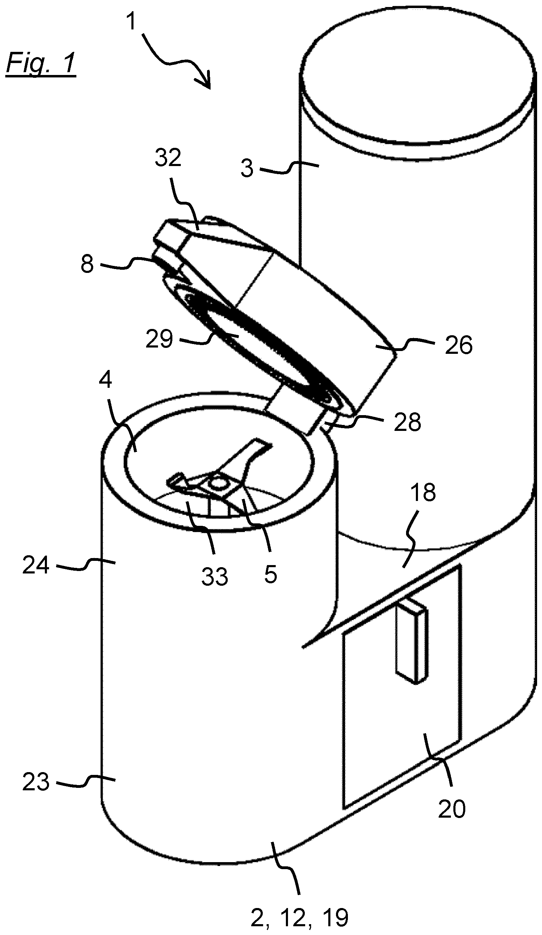

Die in Figur 1 gezeigte Vorrichtung 1 weist in einem Gehäuse 2 einen Vorratsbehälter 3 für Wasser auf, eine Mischkammer 4 mit einem Mischelement 5, einen Antrieb 6 für das Mischelement 5 und eine Druckpumpe 7 zum Pumpen des Wassers aus dem Vorratsbehälter 3 in die Mischkammer 4 sowie einen Auslass 8 zum Auslassen eines nicht dargestellten Milchersatzprodukts aus der Mischkammer 4.

Der Vorratsbehälter 3 besteht aus durchsichtigem Kunststoff und weist eine kreiszylindrische Form mit einem Durchmesser 9 von 100 *mm,* einer Höhe 10 von 200 *mm* und einer nicht dargestellten Wandstärke von 3 *mm* sowie einen abnehmbaren Deckel 11 auf. Der Vorratsbehälter 3 ist von einem Unterteil 12 des Gehäuses 2 abnehmbar und weist an seinem Boden 13 ein nicht dargestelltes Ventil auf, das den abgenommenen Vorratsbehälter 3 dicht verschließt und nach Aufsetzen auf das Unterteil 12 öffnet.

Das Unterteil 12 weist eine quaderförmige Grundform mit einer Höhe 14 von 100 *mm,* einer Länge 15 von 220 *mm* und einer Breite 16 von 100 *mm* auf, die an beiden Enden 17 mit Zylinderflächen mit dem Durchmesser 9 des Vorratsbehälters 3 gerundet ist. Am hinteren Ende 17 nimmt das Unterteil 12 auf seiner Oberseite 18 den Vorratsbehälter 3 auf.

An einer Seitenfläche 19 weist das Unterteil 12 einen herausnehmbaren Tresterbehälter 20 auf. Der Tresterbehälter 20 besteht aus durchsichtigem Kunststoff und weist die Form eines halben, entlang seiner Längsachse geschnittenen Zylinders mit einer Höhe 21 von 90 *mm* und einem Durchmesser 22 von 70 *mm* auf.

An der Vorderseite 23 weist das Unterteil 12 an der Oberseite 18 einen zylindrischen Aufsatz 24 mit dem Durchmesser 9 des Vorratsbehälters 3 und einer Höhe 25 von 70 *mm* auf, in dem sich die Mischkammer 4 befindet. Der Aufsatz 24 setzt sich nach oben in einem Deckel 26 mit einer Höhe 27 von 30 *mm* fort. Der Deckel 26 ist in einem Scharnier 28 mit dem Aufsatz 24 fest verbunden und zu dem Vorratsbehälter 3 klappbar.

In dem Deckel 26 befindet sich ein Filter 29, der bei geschlossenem Deckel 26 die Mischkammer 4 druckdicht verschließt. Der Filter 29 besteht aus einem Stahlblech und weist ca. 200 Löcher 30 mit einem Durchmesser von 0,3 *mm* auf. In dem Deckel 26 befindet sich oberhalb des Filters eine Sammelkammer 31, die in einer vorn an den Deckel 26 angesetzten Nase 32 in den Auslass 8 mündet.

In dem Unterteil 12 führt eine nicht dargestellte Wasserleitung von dem Ventil des Vorratsbehälters 3 über die Druckpumpe 7 in die Mischkammer 4. Die Druckpumpe 7 ist eine elektrische Kolbenpumpe mit einer Pumpleistung von 650 *ml*/*min* unter einem Ausgangsdruck von maximal 15 *bar.*

Weiter führt in dem Unterteil 12 ein nicht dargestellter Tresterkanal vom Boden 33 der Mischkammer 4 in den Tresterbehälter 20. Der Tresterkanal ist im Betrieb mittels einer nicht dargestellten Ventilklappe an der Mischkammer 4 geschlossen. Schließlich ist in dem Unterteil 12 unterhalb der Mischkammer 4 als Antrieb 6 für das Mischelement 5 ein Elektromotor mit einer Leistung von 600 *W* bei einer Drehzahl von 20.000 *U*/*min* und eine nicht dargestellte Steuereinheit sowie auf der dem Tresterbehälter 20 abgewandten Seitenfläche 34 ein Kippschalter 35 angeordnet.

Das Mischelement 5 in der Mischkammer 4 ist ein Flügelmesser aus einem gestanzten und gebogenen Stahlblech mit zwei nach unten und zwei nach oben gebogenen Flügeln 36. An den in Drehrichtung 37 hinten liegenden Kanten der nach oben gebogenen, dem Filter 29 zugewandten Flügel 36 sind zusätzliche Wirbelflächen 38 angeformt. An der Wasserleitung ist weiterhin ein Heizelement 39 angebracht.

Zur Inbetriebnahme der Vorrichtung 1 und Ausführung eines erfindungsgemäßen Verfahrens wird zunächst der Vorratsbehälter 3 mit Wasser gefüllt und auf das Unterteil 12 gesetzt. Damit wird das Ventil geöffnet und die Wasserleitung mit Wasser geflutet. Ein nicht dargestellter Sensor an der Wasserleitung meldet den Wasserstand an die Steuereinheit. Sodann wird eine vorbereitete Portion von Pflanzenteilen, nämlich 40 g Mandeln in die geöffnete Mischkammer 4 gegeben und die Mischkammer 4 mittels des Deckels 26 verschlossen.

Ein nicht dargestellter Sensor an dem Deckel 26 meldet den druckdichten Verschluss der Mischkammer 4 an die Steuereinheit, die zunächst für eine Dauer von 5 s mittels des Mischelements 5 die Pflanzenteile trocken hackt und zerkleinert und anschließend bei noch rotierendem Mischelement 5 mittels der Druckpumpe 7 150 *ml* Wasser in die Mischkammer 4 pumpt.

Während das Wasser den Brei durchströmt, werden darin enthaltene Stärke und Eiweiße gelöst, sodass sich ein Milchersatzprodukt bildet. Fette aus dem Brei werden in dem strömenden Wasser als kleinste Tröpfchen verteilt. Die Wirbelflächen 38 an dem Mischelement 5 vermeiden die Ablagerung des verbleibenden Tresters auf dem Filter 29. Das Milchersatzprodukt dringt durch den Filter 29 und die Sammelkammer 31 aus dem Auslass 8 und wird in einem nicht dargestellten Trinkgefäß aufgefangen.

Anschließend wird bei weiter rotierendem Mischelement 5 und laufender Druckpumpe 7 die Ventilklappe zum Tresterkanal geöffnet und der in der Mischkammer 4 und auf dem Filter 29 verbliebene Trester in den Tresterbehälter 20 gespült.

Bei Verwendung anderer Pflanzenteile können die angegebenen Mengen und Zeiten für die Herstellung des Milchersatzprodukts abweichen und/oder die trockene Zerkleinerung zu Beginn, bevor das Wasser zugeführt wird, entfallen. Zur Herstellung eines Heißgetränks kann das Wasser mittels des Heizelements 39 stufenlos auf bis zu 80 °*C* erhitzt werden.

In den Figuren sind
- 1: Vorrichtung
- 2: Gehäuse
- 3: Vorratsbehälter
- 4: Mischkammer
- 5: Mischelement
- 6: Antrieb
- 7: Druckpumpe
- 8: Auslass
- 9: Durchmesser des Vorratsbehälters
- 10: Höhe des Vorratsbehälters
- 11: Deckel des Vorratsbehälters
- 12: Unterteil des Gehäuses
- 13: Boden des Vorratsbehälters
- 14: Höhe des Unterteils
- 15: Länge des Unterteils
- 16: Breite des Unterteils
- 17: Ende des Unterteils
- 18: Oberseite des Unterteils
- 19: Seitenfläche
- 20: Tresterbehälter
- 21: Höhe des Tresterbehälters
- 22: Durchmesser des Tresterbehälters
- 23: Vorderseite des Unterteils
- 24: Aufsatz
- 25: Höhe des Aufsatzes
- 26: Deckel
- 27: Höhe des Deckels
- 28: Scharnier
- 29: Filter
- 30: Loch
- 31: Sammelkammer
- 32: Nase
- 33: Boden der Mischkammer
- 34: Seitenfläche
- 35: Kippschalter
- 36: Flügel
- 37: Drehrichtung des Mischelements
- 38: Wirbelfläche
- 39: Heizelement

## Patentansprüche

1. Verfahren zum Herstellen eines Milchersatzprodukts, wobei portionsweise Pflanzenteile von eiweiß- und fetthaltigen echten Nüssen wie Haselnuss, Walnuss, Maroni, Macadamia, Hanf und Bucheckern, Kernen wie Mandel und Kokosnuss, Getreide wie Reis, Hafer, Dinkel und Hirse und/oder weiteren Samen wie Soja, Erdnüsse, Cashew, Lupine, Paranuss, Pekannuss und Pistazie zerkleinert und derart mit Wasser gemischt werden, dass das Wasser und die Pflanzenteile das Milchersatzprodukt bilden und ein von den Pflanzenteilen verbleibender Trester von dem Milchersatzprodukt getrennt wird, **dadurch gekennzeichnet, dass** die Pflanzenteile zu einem Brei gemaischt werden, während das Wasser unter einem Überdruck von 2 bis 15 bar durch den Brei und einen Filter (29) gepresst wird, der den Trester zurückhält.

2. Verfahren nach dem vorgenannten Anspruch, **dadurch gekennzeichnet, dass** der Brei turbulent über den Filter (29) strömt.

3. Verfahren nach dem vorgenannten Anspruch, **dadurch gekennzeichnet, dass** die Pflanzenteile trockene Bestandteile wie Schalen, Hüllen, Hülsen, Spelzen oder Grannen umfassen.

4. Verfahren nach einem der vorgenannten Ansprüche, **dadurch gekennzeichnet, dass** das Wasser und/oder der Brei erhitzt werden.

5. Verfahren nach einem der vorgenannten Ansprüche, **dadurch gekennzeichnet, dass** dem Milchersatzprodukt ein Emulgator und/oder ein Öl zugesetzt wird.

6. Verfahren nach einem der vorgenannten Ansprüche, **dadurch gekennzeichnet, dass** die Pflanzenteile zumindest teilweise gemälzt und/oder gebrannt werden.

## Claims

1. A method for producing a milk replacement product, comprising:
comminuting portions of plant parts from real nuts that include protein and fat like hazel nuts, walnuts, chestnuts, macadamia nuts, hemp and beechnuts, seeds like almonds and coconuts, grains like rice, oats, spelt and millet and/or additional seeds like soy, peanuts, cashews, lupines, Brazil nuts, pecans and pistachios;
mixing the plant parts with water so that the water and the plant parts form the milk replacement product; and
separating a pomace left over from the plant parts from the milk replacement product,
**characterized in that** the plant parts are mashed into a pulp while the water is being pressed through the pulp and a filter (29) that retains the pomace under a pressure of 2 to 15 bar.

2. The method according to the preceding claim, **characterized in that** the pulp flows through the filter (29) in a turbulent flow.

3. The method according to the preceding claim, **characterized in that** the plant parts include dry components, like shells, skins, spelts or awns.

4. The method according to one of the preceding claims, **characterized in that** the water and/or the pulp are heated.

5. The method according to one of the preceding claims, **characterized in that** an emulgator and/or an oil is added to the suspension

6. The method according to the one of the preceding claims, **characterized in that** the plant parts are at least partially malted and/or baked.

## Revendications

1. Procédé, destiné à fabriquer un produit de substitution du lait, des parties végétales de vraies noix contenant des protéines et des graisses, comme la noisette, la noix, le marron, la noix de macadamia, de chanvre et de faînes, de graines comme l'amande et la noix de coco, de céréales comme le blé, l'avoine, l'épeautre et le millet et / ou d'autres semences comme le soja, les cacahuètes, la noix de cajou, le lupin, la noix du Brésil, la noix de pécan et la pistache étant broyées par portions et mélangées à de l'eau telle manière à ce que l'eau et les parties végétales constituent le produit de substitution du lait et qu'un marc résiduel des parties végétales soit séparé du produit de substitution du lait, **caractérisé en ce que** les parties végétales sont mélangées en une bouillie, alors que l'eau est pressée sous une surpression de 2 à 15 bar à travers la bouillie et un filtre (29) qui retient le marc.

2. Procédé selon la revendication précédente, **caractérisé en ce que** la bouillie s'écoule de manière turbulente sur le filtre (29).

3. Procédé selon la revendication précédente, **caractérisé en ce que** les parties végétales comprennent des composants secs, tels que des coques, des enveloppes, des cosses, des balles ou des barbes.

4. Procédé selon l'une quelconque des revendications précédentes, **caractérisé en ce que** l'on fait chauffer l'eau et / ou la bouillie.

5. Procédé selon l'une quelconque des revendications précédentes, **caractérisé en ce que** l'on rajoute au produit de substitution du lait un émulsifiant et / ou une huile.

6. Procédé selon l'une quelconque des revendications précédentes, **caractérisé en ce que** l'on procède à un maltage et / ou à une cuisson au moins partiel(le) des parties végétales.
